# EUROPEAN PATENT SPECIFICATION

(11) **EP 3 462 767 B1**
(45) Date of publication and mention of the grant of the patent: **11.08.2021**
(21) Application number: 17194180.0
(22) Date of filing: 29.09.2017
(51) Int. Cl.: H04W 24/08, H04W 24/06

(54) **METHOD FOR PERFORMING A TEST OF AN EMERGENCY CALL SYSTEM, MOBILE COMMUNICATION NETWORK, PROGRAM AND COMPUTER PROGRAM PRODUCT**
VERFAHREN ZUR DURCHFÜHRUNG EINER PRÜFUNG EINES NOTRUFSYSTEMS, MOBILKOMMUNIKATIONSNETZWERK, PROGRAMM UND COMPUTERPROGRAMMPRODUKT
PROCÉDÉ PERMETTANT D'EFFECTUER DES ESSAIS D'UN SYSTÈME D'APPEL D'URGENCE , RÉSEAU DE COMMUNICATION MOBILE, PROGRAMME ET PRODUIT-PROGRAMME INFORMATIQUE

(43) Date of publication of application: 03.04.2019
(73) Proprietor: Deutsche Telekom AG, 53113 Bonn (DE)
(72) Inventor: BÜCHTER, Martin, 53773 Hennef (DE); KISTOWSKI-CAMES, Dirk, 53757 Sankt Augustin (DE); LAUSTER, Reinhard, 3100 St. Pölten (AT)
(74) Representative: Schwöbel, Thilo K.

(56) References cited:
- US-A1- 2009 047 925
- US-A1- 2009 305 722
- US-A1- 2016 029 197
- ETSI: "Mobile Standards Group (MSG); eCall for VoIP", 3GPP DRAFT; MSG-00ECALL03V111_071RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 18 August 2014 (2014-08-18), XP050803969, Retrieved from the Internet: URL:http://www.3gpp.org/ftp/Meetings_3GPP_ SYNC/SA1/Docs/update_01/ [retrieved on 2014-08-18]

## Description

### BACKGROUND

The present invention relates to a method for performing a test of an emergency call system, wherein the emergency call system is used with a mobile communication network, at least one mobile communication device being connected to the mobile communication network, and the mobile communication network comprising or being associated with a plurality of public safety answering points.

Furthermore, the present invention relates to a mobile communication network for performing a test of an emergency call system, wherein the emergency call system is used with a mobile communication network, at least one mobile communication device being connected to the mobile communication network, and the mobile communication network comprising or being associated with a plurality of public safety answering points.

Furthermore, the present invention relates to a program and to a computer program product for performing a test of an emergency call system.

In order to certify interoperability of implementations of emergency call or quality management functionalities, such as, e.g., eCall implementations, tests of such emergency call functionalities (especially eCall implementations or end-of-production quality checks or quality assurances) - especially conformance tests - have to be conducted, proving compliance, interoperability and essential performance criteria.

For example, US 2016/029197 A1 discloses a method for performing a test of an emergency call system. US 2009/047925 A1 discloses a service area database containing emergency numbers of PSAPs and a computing system serving as a PSAP receiving the test call.

One possibility to conduct such interoperability tests (especially relating to the first generation eCall which is based on circuit switched (CS) emergency calls) is to use a radio test-bed which is typically distinct from the surrounding operating radio networks or mobile communications networks. Hence, such an approach is based on the use of a system simulator that replicates an access and core network of a mobile communications network, or at least parts thereof. In such a test-bed of a mobile communications network, test calls are conducted in order to test the implemented functionalities.

This approach is feasible in surroundings that are sufficiently electromagnetically shielded or separated from the environment. In cases where this cannot be ascertained, there are a number of risks, including that such test calls are not connected to the simulator with the needed reliability and/or that the test calls run the risk to be connected to one of the surrounding operational networks and/or - vice versa - that real emergency calls or quality management calls are connected to the simulator in the test-bed environment (and not to the operative mobile communication network).

### SUMMARY

An object of the present invention is to provide a technically simple, effective and especially cost effective solution for performing end-to-end testing of an emergency call system in a cost-effective manner and such that testing is able to be realized easily at different locations, and with a minimum risk of false routing of the involved test calls.

The object of the present invention is achieved by a method for performing a test of an emergency call system according to claim 1.

It is thereby advantageously possible according to the present invention to enable tests, especially for eCall in-vehicle-systems built into cars. According to the present invention, it is also advantageously possible to take into account NIS ERA GLONASS tests in non-Russian countries. Furthermore, it is advantageously possible according to the present invention that a high dynamic range is provided for different realistic test cases. Furthermore, it is especially advantageous to easily realize such end-to-end system (or functionality) verification tests, especially for emergency call related functionalities, at different locations, in a cost efficient manner and with a minimized risk for a false routing of the test calls.

While first generation eCall is based on Circuit Switched (CS) emergency calls (Teleservice 12), typically using an in-band modem, optimized for 2G (GSM) and 3G (UMTS) circuit-switched networks, a packet switched (PS) eCall based and implemented on packet switched networks (e.g. WLAN, 4G and in future 5G IP based mobile networks), deploying the IP Multimedia Subsystem (IMS) emergency call framework, is standardized in 3GPP.

According to the present invention, the mobile communication network is a packet switched network and the emergency call system is configured to handle IP multimedia subsystem based packet switched emergency calls and/or session initiation protocol based packet switched emergency calls.

According to the present invention, it is assumed that an operative mobile communication network - serving "real" customers or users, typically using (operative) user equipments or (operative) mobile communication devices - exists within a certain geographical area. Hence, in order to operatively using such (operative) mobile communication device or (operative) user equipment, an operative device identification identifier and/or an operative subscription identification identifier is assigned or related to each of these (operative) mobile communication devices or (operative) user equipments. In cases that such (operative) user equipments or (operative) mobile communication devices are conducting an emergency call, it is especially preferred that an operative originator identification identifier (and, hence, not a test originator identification identifier) and/or an operative destination identification identifier (and, hence, not a test destination identification identifier) is used for performing such emergency calls.

Furthermore, it is assumed according to the present invention that at least one test mobile communication device is simultaneously connected to the mobile communication network (operatively working with the at least one (operative) mobile communication device or (operative) user equipment, but typically working with a plurality of (operative) mobile communication devices or (operative) user equipments), the at least one test mobile communication device, being used - with at least a part of the mobile communication network - for performing a test of the emergency call system.

According to the present invention, in a first step, at least one test originator identification identifier and/or at least one test destination identification identifier is defined for being used to perform the test of the emergency call system using the at least one test mobile communication device. However, typically, a plurality of different test originator identification identifiers and/or test destination identification identifiers is defined. In order to perform the test of the emergency call system or the emergency call, a test call needs to be initiated or performed in a second step. According to the present invention, such test calls are exclusively initiated or performed using the at least one test originator identification identifier and/or test destination identification identifier (or the plurality of test originator identification identifiers and/or test destination identification identifiers) together with the corresponding test mobile communication device. In a third step, the use - while initiating or performing the test call - of the at least one test originator identification identifier and/or test destination identification identifier is detected by the mobile communication network.

According to a preferred embodiment of the present invention, the database entity or database functionality is located at or accessible via the core network of the mobile communication network.

Thereby, it is advantageously possible according to the present invention to easily and detect the use of the test originator identification identifier and/or test destination identification identifier (or one of the plurality of the test originator identification identifiers and/or test destination identification identifiers), and, hence, to detect such test calls, and differentiate those from "normal" calls (initiated or performed by (operative) mobile communication devices and/or user equipment also present (and active) - along with the test mobile communication device or the plurality of test mobile communication devices - within the (operative) mobile communication network).

According to the present invention it is furthermore preferred that the test of the emergency call system is an end-to-end test.

It is thereby advantageously possible to provide end-to-end testing of the emergency call system.

According to the present invention it is furthermore preferred that the database entity or database functionality comprises a set of test destination identification identifiers, the identifiers of the set of test destination identification identifiers being used to perform the test of the emergency call system using the at least one test mobile communication device.

It is thereby advantageously possible to use the test destination identification identifiers of the set with one or a plurality of test mobile communication devices such that complex and realistic test scenarios are possible to be implemented in an easy and straightforward manner.

According to the present invention it is furthermore preferred that the test call is detected to be a test call by means of determining:
-- whether a call involves the use of the at least one test destination identification identifier, and/or
-- whether a call involves the use of the at least one test originator identification identifier.

It is thereby advantageously possible to implement different test cases and test scenarios.

According to a further preferred embodiment of the present invention, the test destination identification identifier corresponds to a signalling bit, especially as part of a SIP message, and especially as part of the header of a SIP message, or as part of an XML body of a SIP message and/or
wherein the test destination identification identifier corresponds to a test emergency uniform resource name, and/or
wherein the test originator identification identifier corresponds to a specific test packet switched emergency call originator, and/or
wherein the test originator identification identifier corresponds to or comprises a signature information, especially a signature information specific to the test packet switched emergency call originator.

Thereby, it is advantageously possible to very easily and unambiguously detect a test call, and differentiate it from a non-test call (i.e. an operative call).

According to the present invention, a new test packet switched emergency call concept is enables for IMS/SIP based packet switched emergency call (eCall) deployment scenarios used in packet switched networks (like 4G/LTE/WLAN and in future 5G mobile networks). This includes compatibility tests or conformance tests (e.g. regarding SIP signaling, MSD (minimum set of data) data structure and end-to-end functional tests for type approval) as well as the end-to-end quality assurance at the end of the production line, also taking into account NIS ERA GLONASS tests in non-Russian countries deploying the IMS service core.

Especially, the invention is based on the analysis of a piece of information that is specifically used in the packet switched IMS service core network to indicate a test PS-eCall (test destination identification identifier) and/or a piece of information (test originator identification identifier) that is specific of the originator of this test call. Optionally, the indication of a test PS-eCall and/or the identity of the originator can be secured by encryption data (e.g. a digital signature) to verify the identity and validate the authorization for test PS-eCalls.

According to the present invention, this piece of information can, e.g., be included in a SIP header and/or in an XML body of a message (e.g. the initial SIP INVITE message) used for the IMS based PS-eCall. Based on the analysis of this piece of information, a specific routing - depending on the test PS-eCall indication (test destination identification identifier) and/or originator of the Test PS-eCall (test originator identification identifier) - can be applied in the IMS service core network. To identify and handle these test PS-eCalls, sos-URNs (such as, e.g., "sos.ecall.manual", "sos.ecall.automaitc" or any other sos URN being defined for testing purposes) or additionally provided data to the XML body and/or SIP message associated with the test PS-eCalls are analyzed. This deployed data is stored in a data base which is interrogated and connected to the PS-eCall session setup to distinguish the test eCalls from operational emergency calls.

In case the analysis of the relevant data or pieces of information reveals that a test destination identification identifier and/or a test originator identification identifier is used (i.e. is part of the defined pool (or set) of such identifiers in the database), then the call (detected as being a test call) is routed to a predefined destination, and the call is referred to as test call.

While it might be recommended to define the pool (of test destination identification identifier and/or a test originator identification identifier) once (and keep it unchanged for the purposes of a specific test or a specific number of tests), it is also possible - according to an alternative variant of the present invention - to update or extend the set (or pool) of test destination identification identifier and/or a test originator identification identifier as necessary.

According to the present invention, - upon detection of the use of the at least one test originator identification identifier and/or test destination identification identifier while initiating or performing the test call - the test call is specifically routed, within the mobile communication network, in order to perform the test of the emergency call or quality management system or the emergency call or quality management functionality, this specific routing especially involving at least one test public safety answering point or a plurality of test public safety answering point functionality within or associated with the mobile communication network.

Thereby, it is advantageously possible that a detected test call is handled differently (by means of applying a specific routing) by the mobile communication network, compared to a "normal" or operative call.

According to still a further preferred embodiment of the present invention, in case that - regarding an operative call - an operative destination identification identifier and/or an operative originator identification identifier, assigned or related to the at least one mobile communication device or user equipment, is detected in a fourth step prior, during or subsequent to the second and/or the third step, the operative call is routed, within the mobile communication network, in a normal or operative manner, this normal or operative routing especially involving - in case that the operative call is an emergency call - one of the plurality of public safety answering points or the plurality of public safety answering point functionalities within or associated with the mobile communication network.

Thereby, it is advantageously possible that normal or operative calls are not influenced by conducting the end-to-end testing of the emergency call or quality management system or the emergency call or quality management functionality.

According to a further preferred embodiment of the present invention, the at least one test mobile communication device is part of or corresponds to an in-vehicle-system and/or wherein the emergency call or quality management system or the emergency call or quality management functionality is an eCall emergency call system and/or a NIS ERA GLONASS emergency system.

Thereby, it is advantageously possible to perform a multitude of different test cases or test scenarios.

According to still a further embodiment of the present invention, both in case of the test call or test calls as well as in case of the operative call or operative calls an identical public land mobile network identifier, PLMN ID, and/or identical radio transmission frequencies and/or time slots are used.

Thereby it is advantageously possible according to the present invention to strongly reduce the impact of performing the end-to-end tests in an operating mobile communication network.

Furthermore, the present invention relates to a mobile communication network according to claim 8.

Thereby, it is advantageously possible to provide a mobile communication network such that a high dynamic range is provided for different realistic test cases. Furthermore, it is especially advantageous to easily realize tests, especially such end-to-end system (or functionality) verification tests, especially for emergency call related functionalities or quality management related functionalities, at different locations, in a cost efficient manner and with a minimized risk for a false routing of the test calls.

According to a further preferred embodiment of the present invention - especially with respect to the inventive mobile communication network -, the mobile communication network is configured such that the detection of the use of the at least one test originator identification identifier and/or test destination identification identifier is performed by the mobile communication network by means of accessing a database entity or database functionality, especially located at or accessible via the core network of the mobile communication network, wherein especially the database entity or database functionality comprises a set of test originator identification identifiers and/or test destination identification identifiers, the identifiers of the set of test originator identification identifiers and/or test destination identification identifiers being used to perform the test of the emergency call or quality management system or the emergency call or quality management functionality using the at least one test mobile communication device.

Additionally, the present invention relates to a program comprising a computer readable program code which, when executed on a computer and/or on a component of a mobile communication network, causes the computer and/or the component of a mobile communication network to perform the inventive method.

Still additionally, the present invention relates to a computer program product for performing the test of an emergency call or quality management system or an emergency call or quality management functionality, the computer program product comprising a computer program stored on a storage medium, the computer program comprising program code which, when executed on a computer and/or on a component of a mobile communication network, causes the computer and/or the component of a mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrate a mobile communication network having a plurality of base station entities and a plurality of mobile communication devices (or user equipments).
Figure 2 schematically illustrates an operative mobile communication device or user equipment being used, within the mobile communication network, especially for emergency calls, and a test mobile communication device being also used, within the mobile communication network, especially for emergency calls.
Figure 3 schematically illustrates a geographical area having a plurality of public safety answering points, wherein the geographical area is separated or divided in sub-areas, each sub-area having a different public safety answering point.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

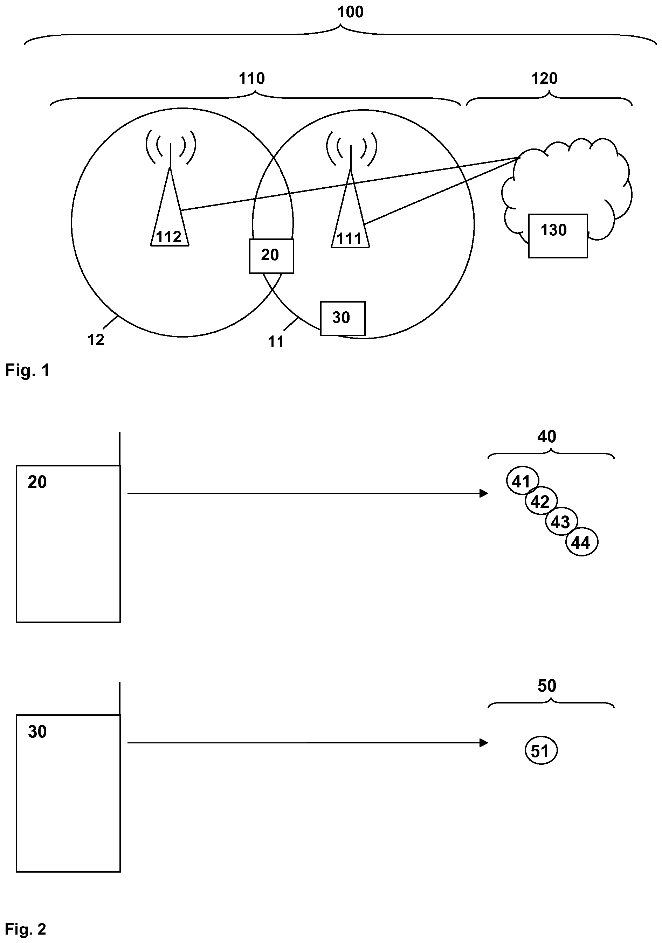

In Figure 1, a mobile communication network 100, especially a public land mobile network 100, is schematically shown, the mobile communication network 100 comprising an access network 110 and a core network 120. The mobile communication network 100 is preferably a cellular telecommunications network comprising typically a plurality of network cells (or radio cells), wherein two network cells (or radio cells) are represented in Figure 1 by means of reference signs 11 and 12. The mobile communication network 100 typically comprises a plurality of user equipments or mobile communication devices. The plurality of user equipments or of mobile communication devices are referred to by means of reference signs 20 and 30, wherein reference sign 20 refers to a operative mobile communication device or user equipment, and reference sign 30 refers to a test mobile communication device. The access network 110 of the mobile communication network 100 comprises, in the exemplary representation of Figure 1, a first base station entity 111, serving the (first) radio cell 11. Furthermore, a second base station entity 112, serving the neighbor (second) radio cell 12, is schematically shown. The base station entities 111, 112 are typically base stations, base transceiver stations or base station entities, e.g. a NodeB or an eNodeB base transceiver stations.

According to the present invention, a test (especially an end-to-end test) of an emergency call or quality management system or of an emergency call or quality management functionality is able to be conducted within the mobile communication network 100 wherein the mobile communication network 100 is both used in an operative manner-serving operative mobile communication devices or user equipments 30 -, and for testing purposes - serving test mobile communication devices 20. In order to be able to execute emergency calls or quality management test calls, the mobile communication network 100 typically comprises or is associated with a plurality of public safety answering points 40 or a plurality of public safety answering point functionalities 40 or quality management test call endpoints. Each of such public safety answering points 40 is typically related (or assigned) to a specific part or sub-area of the (total) geographical area served by the mobile communication network 100.

According to the present invention, at least one mobile communication device or user equipment 20 (but typically a plurality of such mobile communication devices or user equipments) is (are) operatively used within the mobile communication network 100, hence, an operative device identification identifier and/or an operative subscription identification identifier being assigned or related to typically each of the at least one mobile communication device or user equipment 20. Additionally, at least one test mobile communication device 30 (but likewise typically a plurality of such test mobile communication devices or user equipments 30) is simultaneously connected to the mobile communication network 100 in order to be used - with at least a part of the mobile communication network - for performing testing (especially end-to-end testing) of the emergency call or quality management system or the emergency call or quality management functionality. According to the present invention, the test mobile communication device 30 (but likewise typically a plurality of such test mobile communication devices or user equipments 30) is also assigned (as each mobile communication device or user equipment within the mobile communication network 100) to a device identification identifier and/or a subscription identification identifier. According to the present invention, the (operative) device identification identifier(s) and the (operative) subscription identification identifier(s) (assigned to user equipments 20 being operatively used within the mobile communication network 100) on the one hand, and the (operative) device identification identifier(s) and the (operative) subscription identification identifier(s) (assigned to user equipments 20 being operatively used within the mobile communication network 100) on the other hand, correspond to "normal" or operative device identification identifier(s) and/or subscription identification identifier(s), i.e. such identifers assigned to operative user equipments 20 compared to test user equipments 30 do not differ specifically and/or are not treated differently in the context of either an operative emergency call or a test emergency call. According to the present invention, the differentiation between such operative emergency calls and test emergency call is done based on whether a test originator identification identifier and/or a test destination identification identifier is used or whether a test originator identification identifier and/or a test destination identification identifier is used instead of a an operative originator identification identifier or an operative destination identification identifier.

According to the inventive method, in a first step, at least one test originator identification identifier and/or at least one test destination identification identifier is defined for being used to perform the test of the emergency call or quality management system or the emergency call or quality management functionality using the at least one test mobile communication device. Typically, a plurality of such test identifiers are used - such as a set or a pool of such test originator identification identifiers and/or a set or a pool of such test destination identification identifiers. According to the present invention, the set or pool of such test originator identification identifiers and/or test destination identification identifiers are stored in a database entity 130, depicted in Figure 1 schematically and exemplarily as part of the core network 120 of the mobile communication network 100. In case that a test call is initiated or performed (in a second step, i.e. subsequent to the first step) using the at least one test originator identification identifier and/or test destination identification identifier (or one of the plurality of test originator identification identifiers and/or test destination identification identifiers) - typically using a test mobile communication device 30 -, the use of the at least one test originator identification identifier and/or test destination identification identifier is detected (in a third step, i.e. while initiating or performing the test call) by the mobile communication network 100, and hence, it is possible to differentiate a test call from a normal or operative call within the mobile communication network 100.

The present invention also refers to the context of the pan European eCall system and the ERA GLONASS system. In the following, both systems are referred to as eCall unless otherwise specified. These systems enhance traditional emergency call systems using emergency call numbers such as the emergency number "112". eCalls are either generated manually or automatically. While the first generation eCall is based on circuit switched (CS) emergency calls (Teleservice 12) and an in-band modem optimized for 2G (GSM) and 3G (UMTS) CS networks, a packet switched (PS) eCall based and implemented on packet switched networks (e.g. like WLAN, 4G and in future 5G IP based mobile networks), deploying the IP Multimedia Subsystem (IMS) emergency call framework, is standardized in 3GPP.

When activating a voice connection with the most appropriate Public Safety Answering Point (PSAP) at the same time a minimum set of data (MSD) is sent to the PSAP.

The MSD contains vital data such as the location of the vehicle using GNSS (GLONASS, GPS, and Galileo), incident time and Vehicle Identification Number (VIN).

Whereas circuit switched (CS) eCall is piggybacking on 112 emergency voice calls by muting the voice channel for the time needed to transmit the MSD modulated by an In-Band Modem over the voice channel, a PS eCall is based on sos-URNs distinguishing manual / automatic emergency eCalls whereas the MSD is transported via SIP signaling. Hence, such tests to prove compliance for PS eCall (e.g. for vehicle type approval and quality assurance purposes at the end of the production line) are clearly distinct from those which are necessary for CS based eCall tests.

According to the present invention, a dedicated test design for the PS based eCall type-approval and quality assurance is provided.

By setting up an eCall, a voice connection with the most appropriate (i.e. typically serving a specific geographical area or sub-area) public safety answering point (PSAP) is established. At the same time, a minimum set of data (MSD) is sent to the respective public safety answering point receiving the voice call. The MSD contains vital data such as the location of the vehicle using a global navigation satellite system (such as GLONASS, GPS, or Galileo), incident time and vehicle description.

The eCall domains comprise the car domain which has to be equipped with an In-Vehicle-System (IVS), corresponding to a radio stack which, in case of emergency, sets up a voice call and transmits the emergency related data. In addition the IVS comprises a GNSS based positioning system to determine the current location of the vehicle. Furthermore, the eCall domains comprise a network domain to transport the data.

Figure 2 schematically illustrates an operative mobile communication device or user equipment 20 being used, within the mobile communication network 100, especially for emergency calls or quality management test calls. In case of the operative mobile communication device or user equipment 20 is used to conduct an emergency call or a quality management test call, the call is routed to one of a plurality of public safety answering points 40 or to a quality management test call endpoint. In Figure 2, four individual public safety answering points, a first public safety answering point 41, a second public safety answering point 42, a third public safety answering point 43, and a fourth public safety answering point 44 are schematically represented. Which individual public safety answering point is used for a specific emergency call of the operative mobile communication device or user equipment 20 typically depends where the operative mobile communication device or user equipment 20 is located. Furthermore, figure 2 schematically illustrates a test mobile communication device 30 being also used, within the mobile communication network 100, especially for emergency calls. Such test calls, especially test emergency calls are directed to a test public safety answering point 50, comprising - in the exemplary situation represented in Figure 2 - one individual test public safety answering point 51.

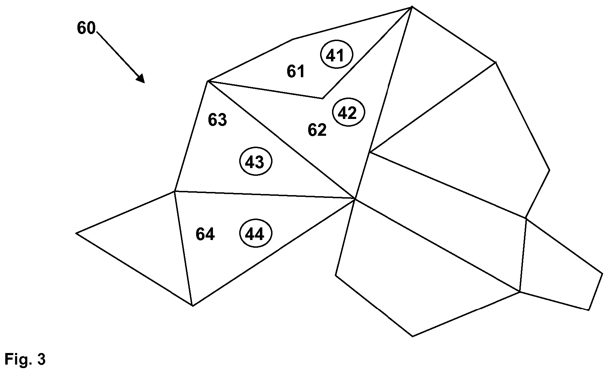

Figure 3 schematically illustrates a geographical area 60 having a plurality of public safety answering points 41, 42, 43, 44. The geographical area 60 is separated or divided in sub-areas 61, 62, 63, 64, wherein each sub-area 61, 62, 63, 64 has a different (individual) public safety answering point 41, 42, 43, 44.

According to the present invention, it is preferred that the detection of the use of one of the test originator identification identifiers and/or test destination identification identifiers is performed by the mobile communication network 100 by means of accessing the database entity 130 or database functionality 130. The database entity 130 or database functionality 130 is especially - but not necessarily - located at or accessible via the core network 120 of the mobile communication network 100. Alternatively (not depicted in Figure 1), the database entity 130 or database functionality 130 might be located in or close to the mobile switching center (MSC) or pool of mobile switching centers (MSC pool) that is connected to those base stations where the tests shall be conducted.

According to the present invention, normal or operative calls are processed by the mobile communication system 100 as if no test calls were present or performed. This means that - regarding an operative call - in case that neither a test originator identification identifier nor a test destination identification identifer is detected (and/or in case that the use of an operative originator identification identifier and/or of an operative destination identification identifier is detected in a fourth step prior, during or subsequent to the second and/or third step, the operative call is routed, within the mobile communication network 100, in a normal or operative manner. This normal or operative routing especially involves - in case that the operative call is an emergency call - one of the plurality of public safety answering points 40 or the plurality of public safety answering point functionalities 40 within or associated with the mobile communication network 100.

In case that a test call shall be initiated (in the second step, subsequent to the first step), a test originator identification identifier and/or a test destination identification identifier is used. The use of these pieces of information or these data (being detected in the third step by the mobile communication network 100) enables the mobile communication network 100 to differentiate between a test call and a normal or operative call within the mobile communication network 100.

Hence, in case these data (or pieces of information) indicating a Test PS-eCall are associated with that PS-eCall and this emergency session is part of the Data-Base and/or the originator of this test-PS-eCall is authorized, the corresponding eCall is routed to a destination (e.g. test PSAP or another quality assurance simulator) which is different to that applicable for operational PS emergency calls (or operative packet switched emergency calls). These calls are referred to as test calls and the test PSAP (or other quality assurance simulator) can verify the IVS conformance (including MSD data), the end-to-end quality and may create a test result documentation (including the originator and authorization data).

In normal operation, meaning that the call is associated with such a piece of information indicating a test call and this call is not part of the data base and/or the originator of this test packet switched eCall is not authorized, the associated sos-URN (i.e. sos.ecall.manual, sos.ecall.automaitc or any other sos defined for testing purposes) is routed to the appropriate Public Safety Answering Point (PSAP) or handled as required and compliant with national regulation. In contrast, test packet switched eCalls may, in accordance with local regulation and if required, be routed to a destination which can even be located outside the originating PLMN or other access network (e.g. WLAN).

The design is also intended to be deployed for legally mandated periodical technical inspections or in the course of normal service interval tests carried out in workshops. In these cases or if otherwise required certificates or the like, can be included in the SIP message and if required stored in the IVS or filed in an appropriate Data-Base.

To initiate a Test PS-eCall, the In Vehicle System (IVS) has to be registered to the network. To ensure that the IVS registers to the network, either the IMSI deployed is known by the network, or the credentials of the SIM Profile are configured so that the IVS is known in the network.

In case the IVS holds multiple SIM Profiles, the concept foresees that each Profile can be configured in a way that the credentials associated with each profile allow to register to the network. The information added to indicate a Test PS-eCall of each such profile have to be part of the Data Base. By this, the profile which is active when placing the emergency call can be identified, and handled as required according to predefined conditions.

The separation and routing of Test PS-eCalls and operational PS-eCalls is based on the analysis of these predetermined pieces of information (i.e. the test originator identification identifier(s) and/or the test destination identification identifier(s)) to indicate a test call used in the PS-eCall and the related SIMs used.

The solution is based on commercial packet switched mobile networks. It is not necessary to set up and operate dedicated radio access test networks. Agreements for the use of frequencies for the purpose of carrying out crash tests and additional preparation and time which might be necessary to allocate frequencies for the duration of the tests are not necessary. The risk that Test PS-eCalls are routed towards an operational PSAP are limited.

Especially, according to the present invention, a specific signaling bit is introduced in the SIP message. The IVS is initiating a Test IMS PS-eCall to an appropriate sos URN (e.g. (i.e. sos.ecall.manual, sos.ecall.automaitc or any other sos URN defined for testing purposes), and the IMS network and/or the EPC network of the local Network recognize that new information (such as, e.g., the specific signalling bit) is added to indicate a Test PS-eCall and that the sos URN of the Test PS-eCall is part of the specified Data Base.

Processing of a Test PS-eCall depending on the new information added to indicate a Test-eCall and/or originator authorization: If the pieces of information are not part of the data base and/or not authorized, the call is routed to the normally responsible PSAP; if the pieces of information are part of the data base and/or are authorized, the call is routed to a pre-defined destination, such as a public safety answering point simulator. Such a PSAP-Simulator (or another quality assurance measurement device) takes the Test PS-eCall and can optionally verify the originator and document the Test results, providing the possibility of PS eCAII compliance testing of either IVS and/or Network and/or PSAP.

The following advantages are realized by means of the present invention:
-- the solution can be is based on commercial mobile communication networks 100,
-- it is not necessary to set up and operate dedicated radio test networks,
-- agreements or arrangements for the use of frequencies for tests (such as crash tests) and additional preparation and time which might be necessary to allocate frequencies for the duration of the tests are not necessary,
-- it is not necessary to use a dedicated PLMN ID for building up a dedicated test / trial network,
-- the risk that test calls are routed towards an operational public safety answering point are minimized,
-- operational emergency calls or quality management test calls are not impeded in proximity to the radio test bed.

## Claims

1. Method for performing a test of an emergency call system, wherein the emergency call system is used with a mobile communication network (100), at least one mobile communication device (20) being connected to the mobile communication network (100), wherein the mobile communication network (100) comprises an access network (110), a core network (120), and a plurality of base station entities (111, 112), and the mobile communication network (100) comprising or being associated with a plurality of public safety answering point functionalities (40),
wherein the at least one mobile communication device (20) is an operative mobile communication device (20), being used operatively with the mobile communication network (100), and having an operative device identification identifier and/or an operative subscription identification identifier assigned or related to the at least one mobile communication device (20),
wherein at least one test mobile communication device (30) is simultaneously connected to the mobile communication network (100), the at least one test mobile communication device (30), being used - with at least a part of the mobile communication network (100) - for performing the test of the emergency call system,
wherein the mobile communication network (100) is a packet switched network and the emergency call system is configured to handle IP multimedia subsystem based packet switched emergency calls and/or session initiation protocol based packet switched emergency calls,
wherein the method comprises the following steps:
-- in a first step, at least one test originator identification identifier is defined for being used to perform the test of the emergency call system using the at least one test mobile communication device (30),
-- in a second step, subsequent to the first step, a test call is initiated or performed using the at least one test mobile communication device (30) and the at least one test originator identification identifier - the at least one test originator identification identifier having been assigned to or having been associated to the at least one test mobile communication device (30) -,
-- in a third step, subsequent to the second step, the test call is detected to be a test call by means of determining whether it involves the use of the at least one test originator identification identifier,
wherein - upon detection of the use of the at least one test originator identification identifier - the test call is routed to a test public safety answering point (50), which is different to that applicable for operative packet switched emergency calls,
wherein the detection of the use of the at least one test originator identification identifier is performed by the mobile communication network (100) by means of accessing a database entity (130) or database functionality (130) which comprises a set of test originator identification identifiers.

2. Method according to claim 1, wherein the database entity (130) or database functionality (130) is located at or accessible via the core network (120) of the mobile communication network (100).

3. Method according to one of the preceding claims, wherein the test of the emergency call system is an end-to-end test.

4. Method according to one of the preceding claims,
wherein the test originator identification identifier corresponds to a specific test packet switched emergency call originator, and/or
wherein the test originator identification identifier corresponds to or comprises a signature information, especially a signature information specific to the test packet switched emergency call originator.

5. Method according to one of the preceding claims, wherein, in case that - regarding an operative call - an operative destination identification identifier and/or an operative originator identification identifier, assigned or related to the at least one mobile communication device (20), is detected in a fourth step prior, during or subsequent to the second and/or the third step, the operative call is routed, within the mobile communication network (100), in a normal or operative manner, this normal or operative routing especially involving - in case that the operative call is an emergency call - one of the plurality of public safety answering point functionalities (40) within or associated with the mobile communication network (100).

6. Method according to one of the preceding claims, wherein the at least one test mobile communication device (30) is part of or corresponds to an in-vehicle-system and/or wherein the emergency call system is an eCall emergency call system and/or a NIS ERA GLONASS emergency system.

7. Method according to one of the preceding claims, wherein both in case of the test call or test calls as well as in case of the operative call or operative calls an identical public land mobile network identifier, PLMN ID, and/or identical radio transmission frequencies and/or time slots are used.

8. Mobile communication network (100) for performing a test of an emergency call system, wherein the emergency call system is used with a mobile communication network (100), at least one mobile communication device (20) being connected to the mobile communication network (100), wherein the mobile communication network (100) comprises an access network (110), a core network (120), and a plurality of base station entities (111, 112), and the mobile communication network (100) comprising or being associated with a plurality of public safety answering point functionalities (40),
wherein the at least one mobile communication device (20) is an operative mobile communication device (20), being used operatively with the mobile communication network (100), and having an operative device identification identifier and/or an operative subscription identification identifier assigned or related to the at least one mobile communication device (20),
wherein at least one test mobile communication device (30) is simultaneously connected to the mobile communication network (100), the at least one test mobile communication device (30), being used - with at least a part of the mobile communication network (100) - for performing the test of the emergency call system,
wherein the mobile communication network (100) is a packet switched network and the emergency call system is configured to handle IP multimedia subsystem based packet switched emergency calls and/or session initiation protocol based packet switched emergency calls,
wherein the mobile communication system (100) is configured such as:
-- at least one test originator identification identifier is defined for being used to perform the test of the emergency call system using the at least one test mobile communication device (30),
-- upon a test call being initiated or performed using the at least one test mobile communication device (30) and the at least one test originator identification identifier
- the at least one test originator identification identifier having been assigned to or having been associated to the at least one test mobile communication device (30) -,
-- the test call is detected to be a test call by the mobile communication network (100) by means of determining whether it involves the use of the at least one test originator identification identifier,
- upon detection of the use of the at least one test originator identification identifier the test call is routed to a test public safety answering point (50), which is different to that applicable for operative packet switched emergency calls,
wherein the mobile communication network (110) is configured such that the detection of the use of the at least one test originator identification identifier is performed by the mobile communication network (100) by means of accessing a database entity (130) or database functionality (130) which comprises a set of test originator identification identifiers.

9. Mobile communication network (100) according to claim 8, wherein the database entity (130) or database functionality (130) is located at or accessible via the core network (120) of the mobile communication network (100), wherein especially the database entity (130) or database functionality (130) comprises a set of test originator identification identifiers, the identifiers of the set of test originator identification identifiers being used to perform the test of the emergency call system using the at least one test mobile communication device (30).

10. Program comprising a computer readable program code which, when executed on a computer and/or on a component of a mobile communication network (100), causes the computer and/or the component of a mobile communication network (100) to perform the related method steps according one of claims 1 to 7.

11. Computer program product for performing the test of an emergency call system, the computer program product comprising a computer program stored on a storage medium, the computer program comprising program code which, when executed on a computer and/or on a component of a mobile communication network (100), causes the computer and/or the component of a mobile communication network (100) to perform the related method steps according one of claims 1 to 7.

## Patentansprüche

1. Verfahren zur Durchführung eines Tests eines Notrufsystems,
wobei das Notrufsystem mit einem Mobilkommunikationsnetz (100) verwendet wird, wobei mindestens eine Mobilkommunikationsvorrichtung (20) mit dem Mobilkommunikationsnetz (100) verbunden ist,
wobei das Mobilkommunikationsnetz (100) ein Zugangsnetz (110), ein Kernnetz (120) und mehrere Basisstationsentitäten (111, 112) umfasst und wobei das Mobilkommunikationsnetz (100) mehrere Notrufabfragestellen-Funktionalitäten (40) umfasst oder mit diesen verknüpft ist,
wobei die mindestens eine Mobilkommunikationsvorrichtung (20) eine operative Mobilkommunikationsvorrichtung (20) ist, die operativ mit dem Mobilkommunikationsnetz (100) verwendet wird, und eine operative Vorrichtungsidentifikationskennung und/oder eine operative Teilnahmeidentifikationskennung aufweist, die der mindestens einen Mobilkommunikationsvorrichtung (20) zugewiesen sind oder sich auf diese beziehen,
wobei mindestens eine Test-Mobilkommunikationsvorrichtung (30) gleichzeitig mit dem Mobilkommunikationsnetz (100) verbunden ist, wobei die mindestens eine Test-Mobilkommunikationsvorrichtung (30) - mit mindestens einem Teil des Mobilkommunikationsnetzes (100) - zur Durchführung des Tests des Notrufsystems verwendet wird,
wobei das Mobilkommunikationsnetz (100) ein paketvermitteltes Netz ist und das Notrufsystem dafür eingerichtet ist, IP-Multimedia-Subsystem-basierte paketvermittelte Notrufe und/oder Sitzungsinitiierungsprotokoll-basierte paketvermittelte Notrufe zu verarbeiten,
wobei das Verfahren die folgenden Schritte umfasst:
- in einem ersten Schritt wird mindestens eine Testoriginatoridentifikationskennung definiert, die dafür verwendet wird, den Test des Notrufsystems unter Verwendung der mindestens einen Test-Mobilkommunikationsvorrichtung (30) durchzuführen,
- in einem zweiten Schritt, im Anschluss an den ersten Schritt, wird ein Testruf unter Verwendung der mindestens einen Test-Mobilkommunikationsvorrichtung (30) und der mindestens einen Testoriginatoridentifikationskennung initiiert oder durchgeführt, wobei die mindestens eine Testoriginatoridentifikationskennung der mindestens einen Test-Mobilkommunikationsvorrichtung (30) zugewiesen oder mit ihr verknüpft wurde,
- in einem dritten Schritt, im Anschluss an den zweiten Schritt, wird der Testruf als ein Testruf detektiert, indem bestimmt wird, ob er die Verwendung der mindestens einen Testoriginatoridentifikationskennung umfasst,
wobei, wenn die Verwendung der mindestens einen Testoriginatoridentifikationskennung detektiert wird, der Testruf zu einer Test-Notrufabfragestelle (50) geroutet wird, die sich von jener unterscheidet, die für operative paketvermittelte Notrufe Anwendung findet,
wobei das Detektieren der Verwendung der mindestens einen Testoriginatoridentifikationskennung durch das Mobilkommunikationsnetz (100) mittels Zugriff auf eine Datenbankentität (130) oder Datenbankfunktionalität (130) durchgeführt wird, die einen Satz von Testoriginatoridentifikationskennungen umfasst.

2. Verfahren nach Anspruch 1,
wobei sich die Datenbankentität (130) oder Datenbankfunktionalität (130) in dem Kernnetz (120) des Mobilkommunikationsnetzes (100) befindet oder über dieses Kernnetz (120) zugänglich ist.

3. Verfahren nach einem der vorangehenden Ansprüche,
wobei der Test des Notrufsystems ein End-to-End-Test ist.

4. Verfahren nach einem der vorangehenden Ansprüche,
wobei die Testoriginatoridentifikationskennung einem spezifischen Testoriginator des paketvermittelten Notrufs entspricht und/oder
wobei die Testoriginatoridentifikationskennung einer Signaturinformation entspricht oder diese umfasst, insbesondere eine Signaturinformation, die für den Testoriginator des paketvermittelten Notrufs spezifisch ist.

5. Verfahren nach einem der vorangehenden Ansprüche,
wobei für den Fall, dass - in Bezug auf einen operativen Ruf
- eine operative Zielidentifikationskennung und/oder eine operative Originatoridentifikationskennung, die der mindestens einen Mobilkommunikationsvorrichtung (20) zugewiesen sind oder sich auf dieses beziehen, in einem vierten Schritt vor, während oder nach dem zweiten und/oder dem dritten Schritt detektiert wird, der operative Ruf innerhalb des Mobilkommunikationsnetzes (100) in einer normalen oder operativen Weise geroutet wird, wobei insbesondere diese normale oder operative Routung - für den Fall, dass der operative Ruf ein Notruf ist - eine der mehrere Notrufabfragestellen-Funktionalitäten (40) involviert, die sich innerhalb des Mobilkommunikationsnetzes (100) befindet oder mit diesem verknüpft ist.

6. Verfahren nach einem der vorangehenden Ansprüche,
wobei die mindestens eine Test-Mobilkommunikationsvorrichtung (30) Teil eines fahrzeuginternen Systems ist oder einem solchen entsprich, und/oder
wobei das Notrufsystem ein eCall-Notrufsystem und/oder ein NIS ERA GLONASS-Notrufsystem ist.

7. Verfahren nach einem der vorangehenden Ansprüche,
wobei sowohl im Fall des Testrufs oder der Testrufe als auch im Fall des operativen Rufs oder der operativen Rufe ein identischer Public Land Mobile Network Identifier (PLMN-ID) und/oder identische Funksendefrequenzen und/oder Zeitschlitze verwendet werden.

8. Mobilkommunikationsnetz (100) zur Durchführung eines Tests eines Notrufsystems,
wobei das Notrufsystem mit einem Mobilkommunikationsnetz (100) verwendet wird, wobei mindestens eine Mobilkommunikationsvorrichtung (20) mit dem Mobilkommunikationsnetz (100) verbunden ist,
wobei das Mobilkommunikationsnetz (100) ein Zugangsnetz (110), ein Kernnetz (120) und mehrere Basisstationsentitäten (111, 112) umfasst und wobei das Mobilkommunikationsnetz (100) mehrere Notrufabfragestellen-Funktionalitäten (40) umfasst oder mit diesen verknüpft ist,
wobei die mindestens eine Mobilkommunikationsvorrichtung (20) eine operative Mobilkommunikationsvorrichtung (20) ist, die operativ mit dem Mobilkommunikationsnetz (100) verwendet wird, und eine operative Vorrichtungsidentifikationskennung und/oder eine operative Teilnahmeidentifikationskennung aufweist, die der mindestens einen Mobilkommunikationsvorrichtung (20) zugewiesen sind oder sich auf diese beziehen,
wobei mindestens eine Test-Mobilkommunikationsvorrichtung (30) gleichzeitig mit dem Mobilkommunikationsnetz (100) verbunden ist, wobei die mindestens eine Test-Mobilkommunikationsvorrichtung (30) - mit mindestens einem Teil des Mobilkommunikationsnetzes (100) - zur Durchführung des Tests des Notrufsystems verwendet wird,
wobei das Mobilkommunikationsnetz (100) ein paketvermitteltes Netz ist und das Notrufsystem dafür eingerichtet ist, IP-Multimedia-Subsystem-basierte paketvermittelte Notrufe und/oder Sitzungsinitiierungsprotokoll-basierte paketvermittelte Notrufe zu verarbeiten,
wobei das Mobilkommunikationsnetz (100) so eingerichtet ist, dass:
- mindestens eine Testoriginatoridentifikationskennung definiert wird, die dafür verwendet wird, den Test des Notrufsystems unter Verwendung der mindestens einen Test-Mobilkommunikationsvorrichtung (30) durchzuführen,
- wenn ein Testruf unter Verwendung der mindestens einen Test-Mobilkommunikationsvorrichtung (30) und der mindestens einen Testoriginatoridentifikationskennung initiiert oder durchgeführt wird, die mindestens eine Testoriginatoridentifikationskennung der mindestens einen Test-Mobilkommunikationsvorrichtung (30) zugewiesen oder mit ihr verknüpft wurde,
- der Testruf durch das Mobilkommunikationsnetz (100) als ein Testruf detektiert wird, indem bestimmt wird, ob er die Verwendung der mindestens einen Testoriginatoridentifikationskennung umfasst,
- wenn die Verwendung der mindestens einen Testoriginatoridentifikationskennung detektiert wird, der Testruf zu einer Test-Notrufabfragestelle (50) geroutet wird, die sich von jener unterscheidet, die für operative paketvermittelte Notrufe Anwendung findet,
wobei das Mobilkommunikationsnetz (110) so eingerichtet ist, dass das Detektieren der Verwendung der mindestens einen Testoriginatoridentifikationskennung durch das Mobilkommunikationsnetz (100) mittels Zugriff auf eine Datenbankentität (130) oder Datenbankfunktionalität (130) durchgeführt wird, die einen Satz von Testoriginatoridentifikationskennungen umfasst.

9. Mobilkommunikationsnetz (100) nach Anspruch 8,
wobei sich die Datenbankentität (130) oder Datenbankfunktionalität (130) in dem Kernnetz (120) des Mobilkommunikationsnetzes (100) befindet oder über dieses Kernnetz (120) zugänglich ist,
wobei insbesondere die Datenbankentität (130) oder die Datenbankfunktionalität (130) einen Satz von Testoriginatoridentifikationskennungen umfasst, wobei die Kennungen des Satzes von Testoriginatoridentifikationskennungen verwendet werden, um den Test des Notrufsystems unter Verwendung der mindestens einen Test-Mobilkommunikationsvorrichtung (30) durchzuführen.

10. Programm, das einen computerlesbaren Programmcode umfasst, der, wenn er auf einem Computer und/oder auf einer Komponente eines Mobilkommunikationsnetzes (100) ausgeführt wird, den Computer und/oder die Komponente eines Mobilkommunikationsnetzes (100) veranlasst, die zugehörigen Verfahrensschritte nach einem der Ansprüche 1 bis 7 durchzuführen.

11. Computerprogrammprodukt zur Durchführung des Tests eines Notrufsystems, wobei das Computerprogrammprodukt ein auf einem Speichermedium gespeichertes Computerprogramm umfasst, wobei das Computerprogramm Programmcode umfasst, der, wenn er auf einem Computer und/oder auf einer Komponente eines Mobilkommunikationsnetzes (100) ausgeführt wird, den Computer und/oder die Komponente eines Mobilkommunikationsnetzes (100) veranlasst, die zugehörigen Verfahrensschritte nach einem der Ansprüche 1 bis 7 durchzuführen.

## Revendications

1. Procédé de réalisation d'un essai d'un système d'appel d'urgence, dans lequel le système d'appel d'urgence est utilisé avec un réseau de communication mobile (100), au moins un dispositif de communication mobile (20) étant connecté au réseau de communication mobile (100), dans lequel le réseau de communication mobile (100) comprend un réseau d'accès (110), un réseau d'infrastructure (120), et une pluralité d'entités de station de base (111, 112), et le réseau de communication mobile (100) comprenant ou étant associé à une pluralité de fonctionnalités de centre de prise d'appels de sécurité publique (40),
dans lequel l'au moins un dispositif de communication mobile (20) est un dispositif de communication mobile opérationnel (20), qui est utilisé opérationnellement avec le réseau de communication mobile (100), et ayant un identifiant d'identification de dispositif opérationnel et/ou un identifiant d'identification d'abonnement opérationnel attribué ou lié à l'au moins un dispositif de communication mobile (20),
dans lequel au moins un dispositif de communication mobile d'essai (30) est connecté simultanément au réseau de communication mobile (100), l'au moins un dispositif de communication mobile d'essai (30), étant utilisé - avec au moins une partie du réseau de communication mobile (100) - pour réaliser l'essai du système d'appel d'urgence, dans lequel le réseau de communication mobile (100) est un réseau à commutation par paquets et le système d'appel d'urgence est configuré pour gérer des appels d'urgence à commutation par paquets basés sur un sous-système multimédia IP et/ou des appels d'urgence à commutation par paquets basés sur un protocole d'ouverture de session,
dans lequel le procédé comprend les étapes suivantes :
- dans une première étape, au moins un identifiant d'identification d'émetteur d'essai est défini pour être utilisé afin de réaliser l'essai du système d'appel d'urgence à l'aide de l'au moins un dispositif de communication mobile d'essai (30),
- dans une deuxième étape, ultérieure à la première étape, un appel d'essai est initié ou réalisé à l'aide de l'au moins un dispositif de communication mobile d'essai (30) et de l'au moins un identifiant d'identification d'émetteur d'essai - l'au moins un identifiant d'identification d'émetteur d'essai ayant été attribué ou ayant été associé à l'au moins un dispositif de communication mobile d'essai (30) -,
- dans une troisième étape, ultérieure à la deuxième étape, l'appel d'essai est détecté comme étant un appel d'essai grâce à la détermination du fait qu'il implique ou non l'utilisation de l'au moins un identifiant d'identification d'émetteur d'essai,
dans lequel - lors de la détection de l'utilisation de l'au moins un identifiant d'identification d'émetteur d'essai - l'appel d'essai est acheminé vers un centre de prise d'appels de sécurité publique (50), qui est différent de celui applicable pour des appels d'urgence à commutation par paquets opérationnels,
dans lequel la détection de l'utilisation de l'au moins un identifiant d'identification d'émetteur d'essai est réalisée par le réseau de communication mobile (100) grâce à l'accès à une entité de base de données (130) ou une fonctionnalité de base de données (130) qui comprend un ensemble d'identifiants d'identification d'émetteur d'essai.

2. Procédé selon la revendication 1, dans lequel l'entité de base de données (130) ou la fonctionnalité de base de données (130) est située au niveau, ou accessible par l'intermédiaire, du réseau d'infrastructure (120) du réseau de communication mobile (100).

3. Procédé selon l'une des revendications précédentes, dans lequel l'essai du système d'appel d'urgence est un essai de bout en bout.

4. Procédé selon l'une des revendications précédentes,
dans lequel l'identifiant d'identification d'émetteur d'essai correspond à un émetteur d'appel d'urgence à commutation par paquets d'essai spécifique, et/ou
dans lequel l'identifiant d'identification d'émetteur d'essai correspond à ou comprend une information de signature, notamment une information de signature spécifique de l'émetteur d'appel d'urgence à commutation par paquets d'essai.

5. Procédé selon l'une des revendications précédentes, dans lequel, dans le cas où - concernant un appel opérationnel - un identifiant d'identification de destination opérationnelle et/ou un identifiant d'identification d'émetteur opérationnel, attribué ou lié à l'au moins un dispositif de communication mobile (20), est détecté dans une quatrième étape avant, pendant ou ultérieurement à la deuxième et/ou la troisième étape, l'appel opérationnel est acheminé, au sein du réseau de communication mobile (100), de manière normale ou opérationnelle, cet acheminement normal ou opérationnel impliquant - dans le cas où l'appel opérationnel est un appel d'urgence - l'une de la pluralité de fonctionnalités de centre de prise d'appels de sécurité publique (40) dans ou associées avec le réseau de communication mobile (100).

6. Procédé selon l'une des revendications précédentes, dans lequel l'au moins un dispositif de communication mobile d'essai (30) fait partie de, ou correspond à, un système embarqué et/ou dans lequel le système d'appel d'urgence est un système d'appel d'urgence eCall et/ou un système d'urgence NIS ERA GLONASS.

7. Procédé selon l'une des revendications précédentes, dans lequel à la fois dans le cas de l'appel d'essai ou d'appels d'essai ainsi que dans le cas de l'appel opérationnel ou d'appels opérationnels, un identifiant de réseau mobile terrestre public, ID RMTP, identique et/ou des fréquences de radiotransmission et/ou intervalles de temps identiques sont utilisés.

8. Réseau de communication mobile (100) pour la réalisation d'un essai d'un système d'appel d'urgence, dans lequel le système d'appel d'urgence est utilisé avec un réseau de communication mobile (100), au moins un dispositif de communication mobile (20) étant connecté au réseau de communication mobile (100), dans lequel le réseau de communication mobile (100) comprend un réseau d'accès (110), un réseau d'infrastructure (120), et une pluralité d'entités de station de base (111, 112), et le réseau de communication mobile (100) comprenant ou étant associé à une pluralité de fonctionnalités de centre de prise d'appels de sécurité publique (40),
dans lequel l'au moins un dispositif de communication mobile (20) est un dispositif de communication mobile opérationnel (20), qui est utilisé opérationnellement avec le réseau de communication mobile (100), et ayant un identifiant d'identification de dispositif opérationnel et/ou un identifiant d'identification d'abonnement opérationnel attribué ou lié à l'au moins un dispositif de communication mobile (20),
dans lequel au moins un dispositif de communication mobile d'essai (30) est connecté simultanément au réseau de communication mobile (100), l'au moins un dispositif de communication mobile d'essai (30), étant utilisé - avec au moins une partie du réseau de communication mobile (100) - pour réaliser l'essai du système d'appel d'urgence, dans lequel le réseau de communication mobile (100) est un réseau à commutation par paquets et le système d'appel d'urgence est configuré pour gérer des appels d'urgence à commutation par paquets basés sur un sous-système multimédia IP et/ou des appels d'urgence à commutation par paquets basés sur un protocole d'ouverture de session,
dans lequel le système de communication mobile (100) est configuré de la manière suivante :
- au moins un identifiant d'identification d'émetteur d'essai est défini pour être utilisé afin de réaliser l'essai du système d'appel d'urgence à l'aide de l'au moins un dispositif de communication mobile d'essai (30),
- lorsqu'un appel d'essai est initié ou réalisé à l'aide de l'au moins un dispositif de communication mobile d'essai (30) et de l'au moins un identifiant d'identification d'émetteur d'essai - l'au moins un identifiant d'identification d'émetteur d'essai ayant été attribué ou ayant été associé à l'au moins un dispositif de communication mobile d'essai (30) -,
- l'appel d'essai est détecté comme étant un appel d'essai par le réseau de communication mobile (100) grâce à la détermination du fait qu'il implique ou non l'utilisation de l'au moins un identifiant d'identification d'émetteur d'essai,
- lors de la détection de l'utilisation de l'au moins un identifiant d'identification d'émetteur d'essai, l'appel d'essai est acheminé vers un centre de prise d'appels de sécurité publique (50), qui est différent de celui applicable pour des appels d'urgence à commutation par paquets opérationnels,
dans lequel le réseau de communication mobile (110) est configuré de sorte que la détection de l'utilisation de l'au moins un identifiant d'identification d'émetteur d'essai est réalisée par le réseau de communication mobile (100) grâce à l'accès à une entité de base de données (130) ou une fonctionnalité de base de données (130) qui comprend un ensemble d'identifiants d'identification d'émetteur d'essai.

9. Réseau de communication mobile (100) selon la revendication 8, dans lequel l'entité de base de données (130) ou la fonctionnalité de base de données (130) est située au niveau, ou accessible par l'intermédiaire, du réseau d'infrastructure (120) du réseau de communication mobile (100), dans lequel notamment l'entité de base de données (130) ou la fonctionnalité de base de données (130) comprend un ensemble d'identifiants d'identification d'émetteur d'essai, les identifiants de l'ensemble d'identifiants d'identification d'émetteur d'essai étant utilisés pour réaliser l'essai du système d'appel d'urgence à l'aide de l'au moins un dispositif de communication mobile d'essai (30).

10. Programme comprenant un code de programme lisible par ordinateur qui, lorsqu'il est exécuté sur un ordinateur et/ou un composant d'un réseau de communication mobile (100), amène l'ordinateur et/ou le composant d'un réseau de communication mobile (100) à réaliser les étapes de procédé associées selon l'une des revendications 1 à 7.

11. Produit-programme d'ordinateur pour la réalisation de l'essai d'un système d'appel d'urgence, le produit-programme d'ordinateur comprenant un programme d'ordinateur stocké sur un support de stockage, le programme d'ordinateur comprenant un code de programme qui, lorsqu'il est exécuté sur un ordinateur et/ou un composant d'un réseau de communication mobile (100), amène l'ordinateur et/ou le composant d'un réseau de communication mobile (100) à réaliser les étapes de procédé associées selon l'une des revendications 1 à 7.
